# EUROPEAN PATENT APPLICATION

(11) **EP 4 336 609 A1**
(43) Date of publication of application: **13.03.2024**
(21) Application number: 22893155.6
(22) Date of filing: 08.11.2022
(51) Int. Cl.: H01M 10/04, H01M 50/342, H01M 50/105

(54) **GAS REMOVAL EQUIPMENT FOR SECONDARY BATTERY**

(30) Priority: 12.11.2021 KR 20210155702
(71) Applicant: LG Energy Solution, Ltd., Seoul 07335 (KR)
(72) Inventor: JUNG, Jea Bong, Daejeon 34122 (KR); AHN, Chang Bum, Daejeon 34122 (KR); SEO, Sang Jin, Daejeon 34122 (KR); JANG, Yeong Cheol, Daejeon 34122 (KR)
(74) Representative: Plasseraud IP
(86) International application number: PCT/KR2022/017467
(87) International publication number: WO 2023/085735

(57) **Abstract**

The present invention relates to a degassing facility for a secondary battery, which includes a degassing device configured to discharge a gas generated in a pouch, wherein the degassing device includes: first and second gas discharge members disposed respectively corresponding to one surface portion and the other surface portion of the pouch to press the one surface portion and the other surface portion of the pouch so as to discharge the gas generated in the pouch through the one surface portion and the other surface portion; and a moving member configured to linearly move the second gas discharge member toward the first gas discharge member so that the first and second gas discharge members press the one surface portion and the other surface portion, and thus, the gas generated in the pouch may be effectively discharged.

## Description

### TECHNICAL FIELD

### CROSS-REFERENCE TO RELATED APPLICATION

The present application claims the benefit of the priority of Korean Patent Application No. 10-2021-0155702, filed on November 12, 2021, which is hereby incorporated by reference in its entirety.

### TECHNICAL FIELD

The present invention relates to a degassing facility for a secondary battery that removes a gas generated inside the secondary battery by discharging the gas to the outside.

### BACKGROUND ART

In general, secondary batteries refer to chargeable and dischargeable batteries, unlike primary batteries that is impossible to charge. Such secondary batteries are widely used in high-tech electronic devices such as phones, notebook computers, and camcorders.

In addition, the secondary batteries may be variously classified according to a structure of an electrode assembly. For example, the secondary batteries may be classified into a stack type structure, a jelly-roll-type structure, and a stack/folding type structure.

Such a secondary battery comprises an electrode assembly and a case accommodating the electrode assembly, and the electrode assembly has a structure in which electrodes and separators are alternately stacked.

A method for manufacturing the secondary battery having the above structure includes a process of accommodating an electrode assembly together with an electrolyte in a pouch, a process of sealing the pouch to manufacture the secondary battery, and a process of charging and discharging the secondary battery to activate the secondary battery.

However, the secondary battery has a problem in that the secondary battery is swelled while generating a large amount of gas within the secondary battery during the charging/discharging. In particular, the secondary battery has a problem in that charging/discharging efficiency is significantly reduced due to the swelling.

### DISCLOSURE OF THE INVENTION

### TECHNICAL PROBLEM

An object of the present invention to solve the above problems is to provide a degassing facility for a secondary battery, which effectively discharges a gas generated inside the secondary battery.

### TECHNICAL SOLUTION

A degassing facility for a secondary battery of the present invention for achieving the above object may include a degassing device configured to discharge a gas generated in a pouch, wherein the degassing device includes: first and second gas discharge members disposed respectively corresponding to one surface portion and the other surface portion of the pouch to press the one surface portion and the other surface portion of the pouch so as to discharge the gas generated in the pouch through the one surface portion and the other surface portion; and a moving member configured to linearly move the second gas discharge member toward the first gas discharge member so that the first and second gas discharge members press the one surface portion and the other surface portion, wherein the moving member includes: a coupling piece of which a surface facing the one surface portion is coupled to the first gas discharge member; and a movable piece of which a surface facing the other surface is coupled to the second gas discharge member and which is connected to the coupling piece, wherein, while the movable piece linearly moves toward the coupling piece, the second gas discharge member linearly moves toward the first gas discharge member to press the one surface portion and the other surface portion of the pouch through the first and second gas discharge members.

The coupling piece may be provided with a guide rail formed in a direction of the movable piece, and the movable piece may be provided with a guide part connected to the guide rail and linearly moving toward the coupling piece along the guide rail.

The first gas discharge member may include a first body coupled to a coupling piece and disposed on the one surface portion of the pouch, a first main contact pad pressed by the one surface portion of the pouch to form a sealed space, a first punching piece configured to punch the pouch disposed in the sealed pace formed by the first main contact pad, and a first gas discharge part configured to discharge the gas inside the pouch through a punched portion of the pouch and the first main contact pad, and the second gas discharge member may include a second body disposed on the other surface portion of the pouch, a second main contact pad pressed by the other surface portion of the pouch to form a sealed space, a second punching piece configured to punch the pouch disposed in the sealed space formed by the second main contact pad, and a second gas discharge part configured to discharge the gas inside the pouch through the punched portion of the pouch and the second main contact pad.

The first main contact pad and the second main contact pad may be pressed to correspond to the one surface portion and the other surface portion, and the first punching piece and the second punching piece may be provided to punch one side and the other side of the pouch disposed in the sealed space between the first main contact pad and the second main contact pad, respectively.

The first gas discharge member may further include one or more first adsorption pieces provided on the first body and adsorbed on the one surface portion of the pouch, and the second gas discharge member may further include one or more second adsorption pieces provided on the second body and adsorbed to the other surface of the pouch.

When the first and second gas discharge members return to their original positions by the movable pieces, the first adsorption piece and the second adsorption piece may allow the one surface portion and the other surface portion of the pouch to be spaced apart from each other so as to form a gap therebetween.

The first adsorption piece may include a first adsorption pad adsorbed to the one surface portion of the pouch and a first suction body configured to provide suction force so that the first adsorption pad is adsorbed to the one surface portion of the pouch, and the second adsorption piece may include a second adsorption pad adsorbed to the other surface portion of the pouch and a second suction body configured to provide suction force so that the second adsorption pad is adsorbed to the other surface portion of the pouch.

The degassing device may further include a sealing member configured to press both surfaces of the pouch, which have the pouched portions, and simultaneously apply heat to both the surfaces of the pouch to seal the punched portions formed in the pouch.

The first sealing piece may be provided on the first body, have a closed curve shape connected along an outer circumferential surface of the first main contact pad, and apply heat to the one surface portion having the punched portion while pressing the one surface portion, and the second sealing piece may be provided on the second body, have a closed curve shape connected along an outer circumferential surface of the second main contact pad, and apply heat to the other surface portion having the punched portion while pressing the other surface portion.

A sealing groove which has a closed curve shape may be formed in a pressing surface of the first sealing piece configured to press the one surface portion, and a sealing protrusion which has a closed curve shape and which is inserted into the sealing groove may be formed on a pressing surface of the second sealing piece configured to press the other surface portion.

The degassing device may further include a sub contact member configured to seal the pouch disposed between the first gas discharge member and the second gas discharge member, wherein the sub contact member may include: a first sub contact pad formed along an edge of the first body, having a closed curve shape of which both ends are connected to each other, and provided to be in close contact with the one surface portion of the pouch having the sealed space, which is closely contacted by the first main contact pad; and a second sub close contact pad formed along an edge of the second body, having a closed curve shape of which both ends are connected to each other, and provided to be in close contact with the other surface portion of the pouch having sealed space, which is closely contacted by the second main contact pad.

The sub close contact member may further include a third suction body configured to generate suction force so that the first and second sub contact pads are adsorbed to the one surface portion and the other surface portion of the pouch.

The degassing facility may further include a moving device configured to move the movable piece toward the coupling piece, wherein the moving device may include: a frame to which the coupling piece is fixed; a movable rod provided on the frame, coupled to the movable piece, and configured to move the movable piece toward the coupling piece when moving forward; and a driving piece configured to allow the movable rod to move forward.

The degassing device may further include a guide member configured to guide the pouch so that the pouch inserted between the first and second gas discharge members are not in contact with the first and second gas discharge members, wherein the guide member may include: a first guide pin fixed to the first gas discharge member and configured to support the one surface portion of the pouch so as to prevent the one surface portion of the pouch from being in contact with the first gad discharge member; and a second guide pin fixed to the second gas discharge member and configured to support the other surface portion of the pouch so as to prevent the other surface portion of the pouch from being in contact with the second gas discharge member.

The first guide pin and the second guide pin may have elastic restoring force so as to be bent in a direction facing each other or in an opposite direction.

### ADVANTAGEOUS EFFECTS

The degassing facility for the secondary battery of the present invention may include the first and second gas discharge members and the moving member to discharge the gas at the same time through the one surface portion and the other surface portion of the pouch, thereby improving the gas discharge performance.

### BRIEF DESCRIPTION OF THE DRAWINGS

FIG. 1 is a perspective view illustrating a degassing facility for a secondary battery to the present invention.
FIG. 2 is a side view of FIG. 1.
FIG. 3 is a plan view of FIG. 1,
FIG. 4 is a perspective view illustrating a degassing device included in the degassing facility for the secondary battery to the present invention.
FIG. 5 is a front view of FIG. 4.
FIG. 6 is an exploded perspective view illustrating a first gas discharge member of the degassing device illustrated in FIG. 4.
FIG. 7 is a front view of FIG. 6.
FIG. 8 is an exploded perspective view illustrating a second gas discharge member of the degassing device illustrated in FIG. 4.
FIG. 9 is a front view of FIG. 8.
FIG. 10 is a cross-sectional view of FIG. 4.
FIG. 11 is a front view illustrating a gas and air suction structure of the degassing device illustrated in FIG. 4.
FIGS. 12 to 14 are views illustrating an operation state of the degassing device illustrated in FIG. 4, wherein FIG. 12 is a view illustrating a standby state of the degassing device, FIG. 13 is a view illustrating a pressing state of the degassing device, and FIG. 14 is a view illustrating a state in which one surface portion and the other surface portion of a pouch are spaced apart from each other to form a gap by the degassing device.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

### [Secondary battery]

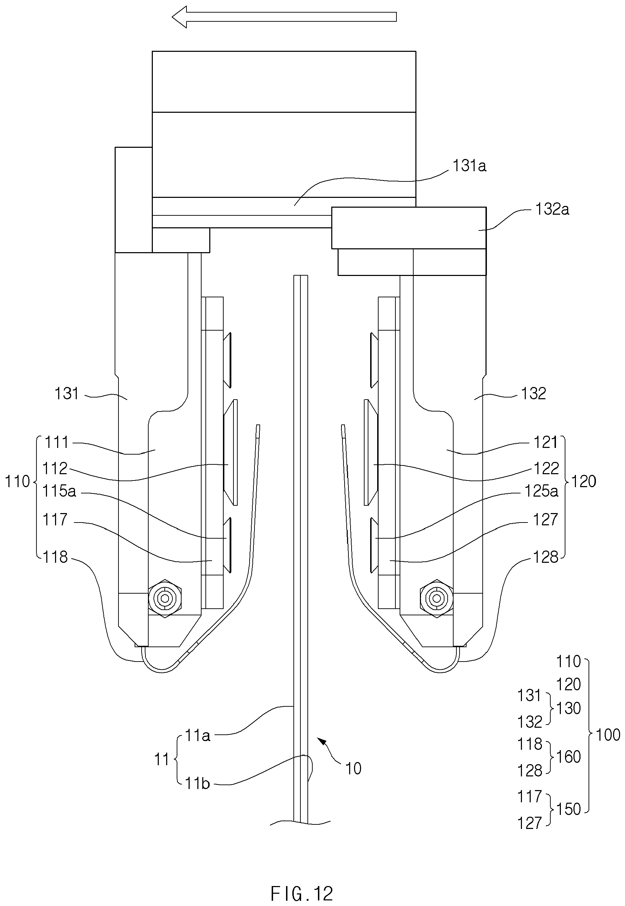

Referring to FIGS. 12 to 14, a secondary battery 10 includes an electrode assembly and a pouch 11 accommodating the electrode assembly. The pouch 11 includes an accommodation part accommodating the electrode assembly, a gas collecting part collecting a gas generated in the accommodation part, and a sealing part sealing the accommodation part and the gas collecting part.

The pouch 11 having such a structure is manufactured using a pair of pouch films. That is, the accommodation part accommodating the electrode assembly is formed at one side of the pair of pouch films, a gas pocket part is formed at the other side of the pair of pouch films, and the sealing part sealing the accommodation part and the gas pocket part is formed on an edge of the pair of pouch films.

Hereinafter, the pouch film disposed at one side of the pouch is referred to as one surface portion 11a, and the pouch film disposed at the other side is referred to as the other surface portion 11b.

The secondary battery may improve battery performance through charging and discharging. Here, there is a problem in that a large amount of gas is generated inside the pouch. In order to solve the above problem, the gas inside the pouch is discharged. Here, a gas removal facility for the secondary battery according to the present invention is used.

### [Degassing facility for secondary battery of the present invention]

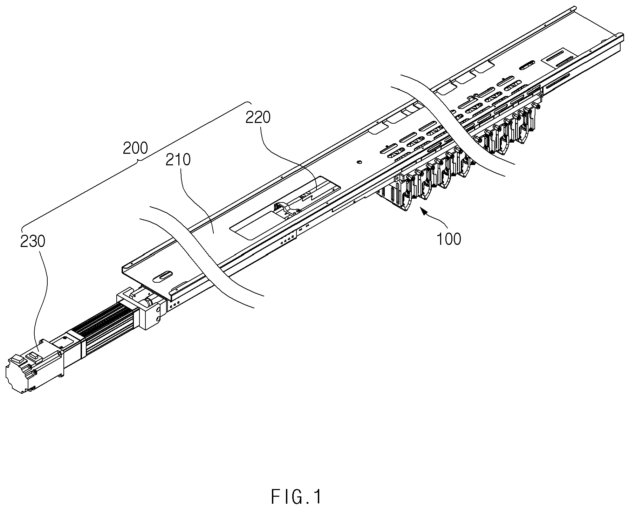

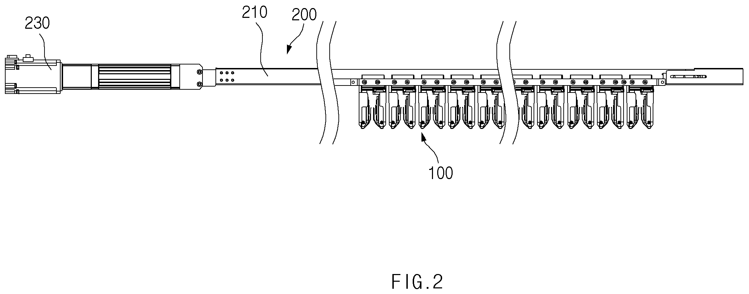

As illustrated in FIGS. 1 to 3, the degassing facility for the secondary battery of the present invention is configured to discharge a gas generated inside a pouch through a gas pocket part (hereinafter, referred to as a pouch) of the pouch 11. Particularly, the degassing facility for the secondary battery of the present invention may simultaneously discharge the gas inside the pouch through the one surface portion 11a and the other surface portion 11b of the pouch 11, and as a result, efficiency and speed of the gas discharge may be improved.

For example, the degassing facility for the secondary battery of the present invention may include a degassing device 100 for discharging the gas generated inside the pouch.

### Degassing device

The degassing device 100 has a structure for simultaneously discharging a gas inside the pouch through the one surface portion and the other surface portion of the pouch.

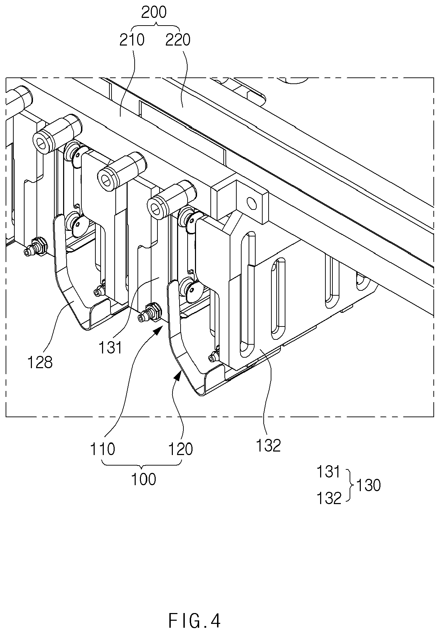

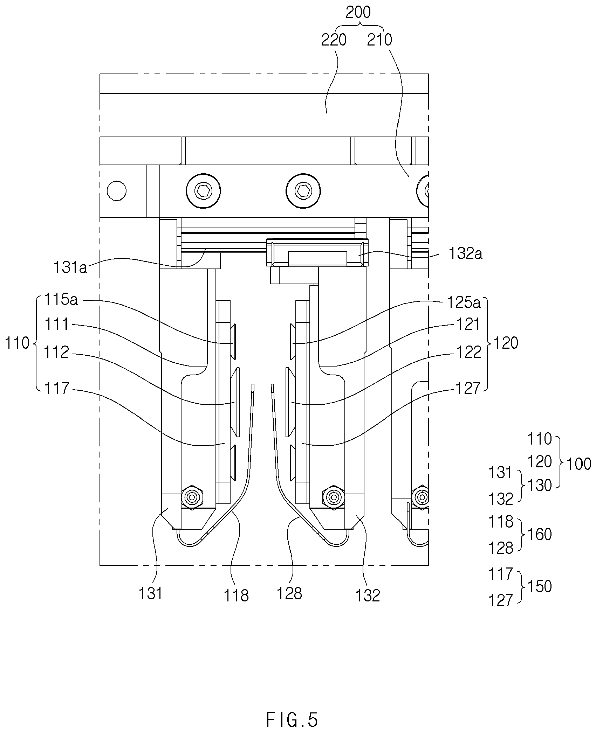

That is, as illustrated in FIGS. 4 and 5, the degassing device 100 includes: first and second gas discharge members 110 and 120 disposed respectively corresponding to the one surface portion and the other surface portion of the pouch to press the one surface portion and the other surface portion of the pouch so as to discharge a gas generated in the pouch through the one surface portion and the other surface portion; and a moving member 130 linearly moving the second gas discharge member 120 toward the first gas discharge member 110 so that the first and second gas discharge members press the one surface portion and the other surface portion.

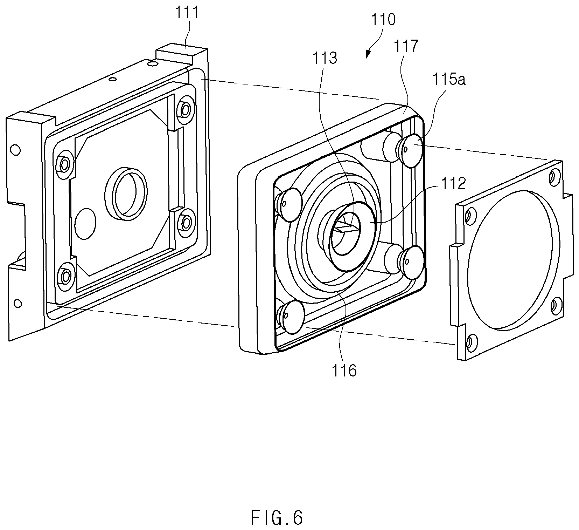

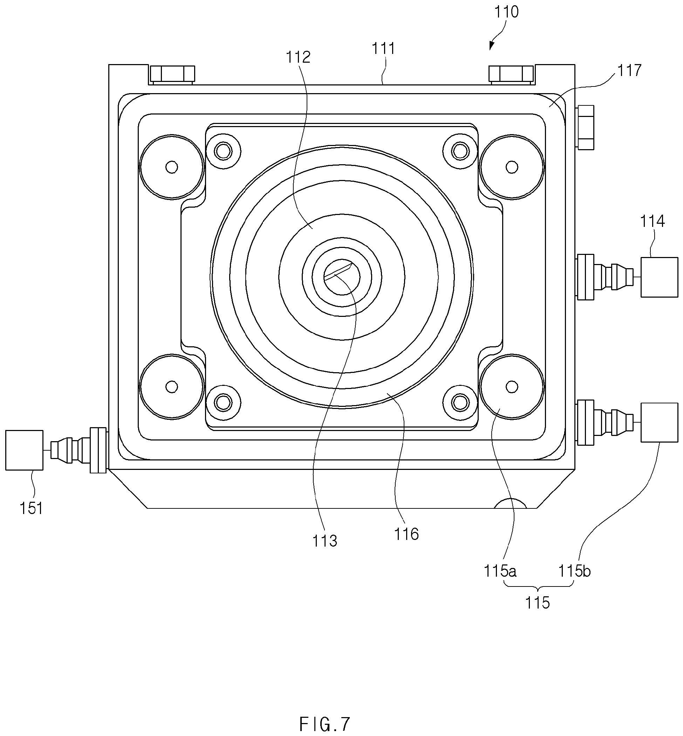

As illustrated in FIGS. 6 and 7, the first gas discharge member 110 is configured to discharge the gas inside the pouch 11 through the one surface portion 11a of the pouch 11. That is, the first gas discharge member 110 includes a first body 111 coupled to a coupling piece 131 and disposed on the one surface portion 11a of the pouch 11, a first main contact pad 112 pressed by the one surface portion 11a of the pouch 11 to form a sealed space, a first punching piece 113 configured to punch the pouch 11 disposed in the sealed space formed by the first main contact pad 112, and a first gas discharge part 114 configured to discharge a gas inside the pouch 11 through the punched portion of the pouch 11 and the first main contact pad 112.

Here, the first main contact pad 112 has a corrugated tube shape, is made of a material having restoring force, is provided at a center of a surface of the first body 111 facing the one surface portion 11a, and is pressed by the one surface portion 11a of the pouch 11 to form the sealed space.

The first punching piece 113 is provided inside the first main contact pad 112 and is fixed to the first body 111 with a blade facing the one surface portion 11a. Here, the blade of the first punching piece 113 is disposed so as not to protrude out of the first main contact pad 112. This is done for preventing the first punching piece 113 from punching the one surface portion 11a before the first main contact pad 112 is pressed by the one surface portion 11a. Particularly, the first punching piece 113 may be provided in a pair, and thus, two punched portions may be formed in the one surface portion 11a, and as a result, it is possible to prevent poor punching and improve gas discharge power. The first punching piece 113 may be detachably coupled to the first body 111 to improve efficiency of a use. In addition, the first punching piece 113 may be provided in the form of a cutter blade, and thus, a straight line-shaped punched portion may be formed in one surface portion 11a.

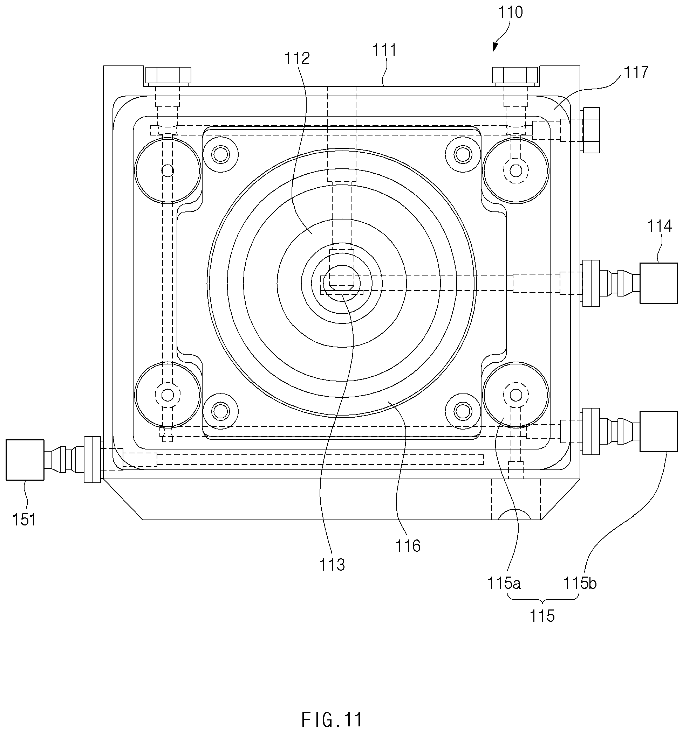

Referring to FIG. 11, the first gas discharge part 114 is a device for suctioning a gas and is connected to the inside of the first main contact pad 112 through a discharge line formed in the first body 111. Thus, the first gas discharge part 114 may discharge the gas inside the pouch 11 to the outside through the pouched portion of the pouch 11 and the first main contact pad 112 by using suction force.

Describing an operation state of the first gas discharge member 110 having such a configuration, when the first body 111 is disposed on the one surface portion 11a of the pouch 11, the first main contact pad 112 may be pressed to the one surface portion 11a to form the sealed space, and then, the first punching piece 113 may punch the one surface portion 11a disposed in the sealed space. Next, the first gas discharge part 114 may discharge the gas generated inside the pouch 11 to the outside through the punched portion of the pouch 11 and the first main contact pad 112.

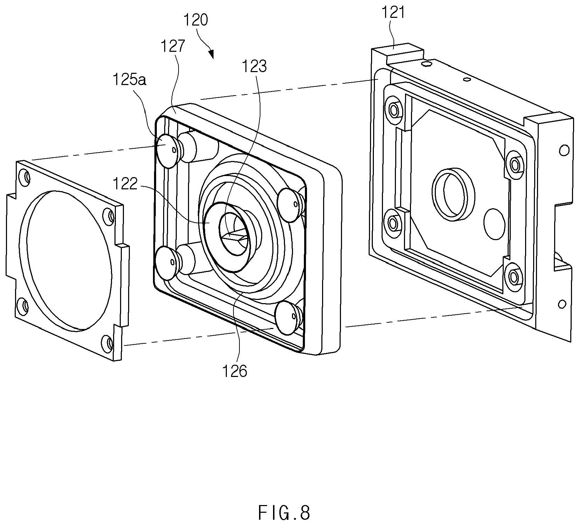

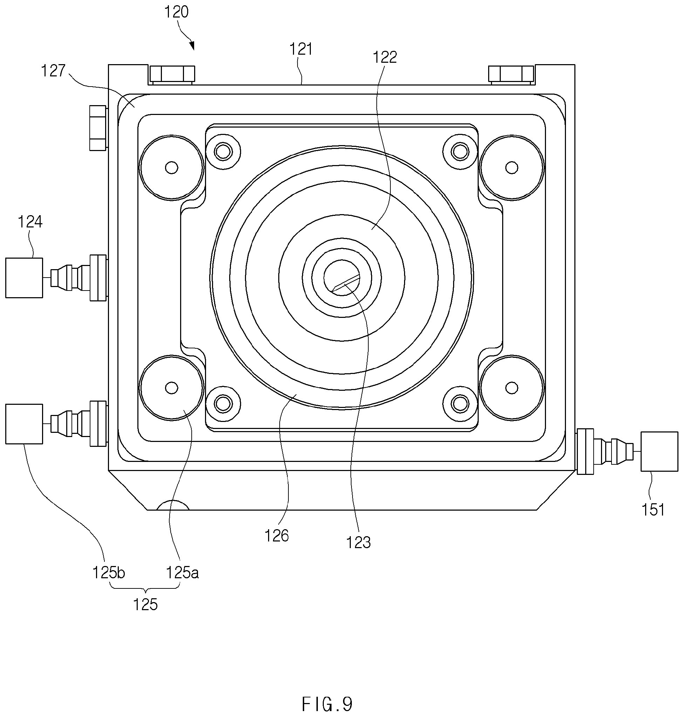

As illustrated in FIGS. 8 and 9, the second gas discharge member 120 is configured to discharge the gas inside the pouch 11 through the other surface portion 11b of the pouch 11. That is, the second gas discharge member 120 includes a second body 121 disposed on the other surface portion 11b of the pouch 11, a second main contact pad 122 pressed by the other surface portion 11b of the pouch 11 to form a sealed space, a second punching piece 123 configured to punch the pouch 11 disposed in the sealed space formed by the second main contact pad 122, and a second gas discharge part 124 configured to discharge a gas inside the pouch 11 through the punched portion of the pouch 11 and the second main contact pad 122.

Here, the second main contact pad 122 may be provided with the same shape and material as the first main contact pad 112. In addition, the second main contact pad 122 is provided at a center of a surface of the second body 121 facing the other surface portion 11b and is in close contact with the other surface portion 11b of the pouch 11 to form a sealed space.

The second punching piece 123 may be provided with the same shape and material as the first punching piece 113. That is, the second punching piece 123 is provided inside the second main contact pad 122 and is fixed to the second body 121 with the blade facing the other surface portion 11b. Here, the blade of the second punching piece 123 is disposed so as not to protrude out of the second main contact pad 122. This is done for preventing the second punching piece 123 from punching the other surface portion 11b before the second main contact pad 122 is pressed by the other surface portion 11b. Particularly, the second punching piece 123 may be provided in a pair, and thus, two punched portions may be formed in the other surface portion 11b, and as a result, it is possible to prevent poor punching and improve gas discharge power. The second punching piece 123 may be detachably coupled to the second body 121 to improve efficiency of a use. In addition, the second punching piece 123 may be provided in the form of a cutter blade, and thus, a straight line-shaped punched portion may be formed in the other surface portion 11b.

The second gas discharge part 124 may be provided with the same device as the first gas discharge part 114. That is, the second gas discharge part 124 is a device for suctioning a gas and is connected to the inside of the second main contact pad 122 through a discharge line formed in the second body 121. Thus, the second gas discharge part 124 discharges the gas inside the pouch 11 to the outside through the pouched portion of the pouch 11 and the second main contact pad 122 by using suction force.

Describing an operation state of the second gas discharge member having such a configuration, when the second body 121 is disposed on the other surface portion 11b of the pouch 11, the second main contact pad 122 may be pressed to the other surface portion 11b to form the sealed space, and then, the second punching piece 123 may punch the other surface portion 11b disposed in the sealed space. Thus, the second gas discharge part 124 may discharge the gas inside the pouch 11 to the outside through the pouched portion of the pouch 11 and the second main contact pad 122 by using suction force.

The moving member 130 linearly moves the second gas discharge member 120 toward the first gas discharge member 110 so that the first and second gas discharge members are disposed to correspond to the one surface portion 11a and the other surface portion 11b, respectively, and the first and second gas discharge members 110 and 120 press the one surface portion 11a and the other surface portion 11b.

That is, as illustrated in FIGS. 4 and 5, the moving member 130 includes: a coupling piece 131 of which a surface facing the one surface portion 11a is coupled to the first gas discharge member 110; and a movable piece 132 of which a surface facing the other surface 11b is coupled to the second gas discharge member and which is connected to the coupling piece 131, wherein the movable piece 132 is connected to be linearly movable toward the coupling piece 131.

In the moving member 130 having such a configuration, when the movable piece 132 linearly moves toward the coupling piece 131, the second gas discharge member may linearly move toward the first gas discharge member 110, and thus, the first and second gas discharge members may be disposed to correspond to the one surface portion 11a and the other surface portion 11b of the pouch 11, respectively.

Here, the coupling piece 131 is provided with a guide rail 131a formed in a direction of the movable piece 132, and the movable piece 132 is provided with a guide part 132a connected to the guide rail 131a and linearly moving toward the coupling piece 131 along the guide rail 131a. Thus, the movable piece 132 may linearly move toward the coupling piece 131 along the guide rail 131a.

Therefore, the degassing device 100 may simultaneously discharge the gas generated inside the pouch 11 through the one surface portion 11a and the other surface portion 11b of the pouch 11.

In the degassing device 100, the first main contact pad 112 and the second main contact pad 122 may be pressed to correspond to the one surface portion 11a and the other surface portion 11b. Thus, the sealed space may be formed in the pouch 11 disposed between the first main contact pad 112 and the second main contact pad 122, and as a result, even if the pouch 11 disposed in the sealed space is punched, the gas may be prevented from being introduced between the first main contact pad 112 and the pouch 11 and between the second main contact pad 122 and the pouch 11.

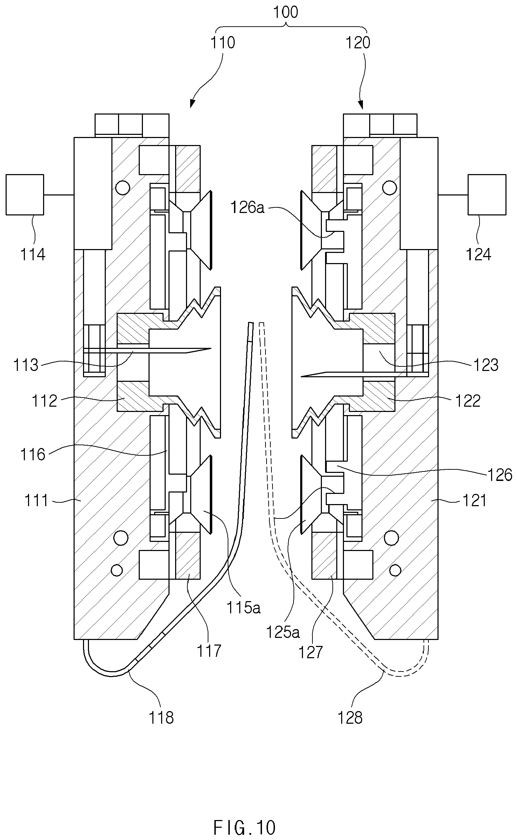

In the degassing device 100, the first punching piece 113 and the second punching piece 123 are provided to punch one side and the other side of the pouch 11 disposed in the sealed space between the first main contact pad 112 and the second main contact pad 122, respectively. That is, referring to FIG. 10, the first punching piece 113 may be provided to punch an upper side of the pouch 11, and the second punching piece 123 may be provided to punch a lower side of the pouch 11. Thus, an occurrence of interference between the first punching piece 113 and the second punching piece 123 may be prevented.

The first gas discharge member 110 may further include one or more first adsorption pieces 115 provided on the first body 111 and adsorbed on one surface of the pouch 11, and the second gas discharge member may further include one or more second adsorption pieces 125 provided on the second body 121 and adsorbed to the other surface of the pouch 11.

That is, when the one surface portion 11a and the other surface portion 11b of the pouch 11 are in close contact with each other, the gas inside the pouch 11 may not be smoothly discharged. Thus, the first adsorption piece 115 and the second adsorption piece 125 adsorb the one surface portion 11a and the other surface portion 11b, respectively, and when the first adsorption piece 115 and the second adsorption piece 125 move linearly in a direction in which the first and second gas discharge members are spaced apart from each other, the first adsorption piece 115 and the second adsorption piece 125 may pull the one surface portion 11a and the other surface portion 11b of the pouch 11, respectively, and as a result, the one surface portion 11a and the other surface portion 11b may be spaced apart from each other to form a gap therebetween, and thus, the gas may be smoothly discharged.

At least one or more, preferably four first adsorption pieces 115 may be provided on the first body 111 disposed outside the first main contact pad. At least one or more, preferably four second adsorption pieces may be provided on the second body 121 disposed outside the second main contact pad.

For example, referring to FIG. 7, the first adsorption piece 115 includes a first adsorption pad 115a adsorbed to the one surface portion 11a of the pouch 11 and a first suction body 115b configured to provide suction force so that the first adsorption pad 115a is adsorbed to the one surface portion 11a of the pouch 11. The second adsorption piece 125 includes a second adsorption pad 125a adsorbed to the other surface portion 11b of the pouch 11 and a second suction body 125b configured to provide suction force so that the second adsorption pad 125a is adsorbed to the other surface portion 11b of the pouch 11. That is, when the suction power is provided to the first adsorption piece 115 by the first suction body 115b, the first adsorption pad 115a is adsorbed to the one surface portion 11a, and when the suction force is removed by the first suction body 115b, the first adsorption pad 115a is separated from the one surface portion 11a. When the suction power is provided to the second adsorption piece 125 by the second suction body 125b, the second adsorption pad 115a is adsorbed to the other surface portion 11b, and when the suction force is removed by the second suction body 125b, the second adsorption pad 125a is separated from the other surface portion 11b.

Referring to FIG. 10, the degassing device 100 further includes a sealing member 140 configured to press both surfaces of the pouch 11, which have the pouched portions, and simultaneously apply heat to both the surfaces of the pouch 11 to seal the punched portions formed in the pouch 11, and the sealing member 140 is provided with a first sealing piece 116 and a second sealing piece 126.

That is, the first sealing piece 116 is provided on the first body 111 between the first main contact pad 112 and the first adsorption piece 115, has a closed curve shape formed along an outer circumferential surface of the first main contact pad 112, and applies heat to the one surface portion 11a having the punched portion while pressing the one surface portion 11a.

The second sealing piece 126 is provided on the second body 121 between the second main contact pad 122 and the second adsorption piece, has a closed curve shape formed along an outer circumferential surface of the second main contact pad 122, and applies heat to the other surface portion 11b having the punched portion while pressing the other surface portion 11b.

The first sealing piece 116 and the second sealing piece 126, which have such configurations, press the one surface portion 11a and the other surface portion 11b of the pouch 11 and simultaneously apply heat to the one surface portion 11a and the other surface portion 11b of the pouch 11 in a state of being disposed to correspond to the one surface portion 11a and the other surface portion 11b of the pouch 11 to seal the surface of the pouch 11 having the punched portion. The gas and electrolyte inside the pouch 11 may be prevented from being discharged further through the punched portion.

A sealing protrusion having a closed curve shape may be formed on a pressing surface of the first sealing piece 116 configured to press the one surface portion 11a, and a sealing groove which has a closed curve shape and into which the sealing protrusion is inserted may be formed in a pressing surface of the second sealing piece 126 configured to press the other surface portion 11b. Thus, when the first sealing piece 116 and the second sealing piece 126 are pressed on the surface of the pouch 11 to correspond to each other, the sealing protrusion of the first sealing piece 116 may be inserted into the sealing groove of the second sealing piece 126 to effectively press the pouch disposed therebetween and simultaneously apply heat the pouch 11.

The degassing device 100 may further include a sub contact member 150 for preventing the gas from being discharged between the first and second main contact pads and the pouch 11. That is, the sub close contact member 150 has a structure to secondarily seal the pouch 11 located between the first gas discharge member 110 and the second gas discharge member 120.

That is, the sub contact member 150 may include a first sub contact pad 117 and a second sub contact pad 127.

The first sub contact pad 117 is formed along an edge of the first body 111, has a closed curve shape of which both ends are connected to each other, and is provided to be in close contact with the one surface portion 11a of the pouch 11 having the sealed space, which is closely contacted by the first main contact pad 113.

The second sub close contact pad 127 is formed along an edge of the second body 121, has a closed curve shape of which both ends are connected to each other, and is provided to be in close contact with the other surface portion 11b of the pouch having sealed space, which is closely contacted by the second main contact pad 122.

Here, each of the first sub contact pad 117 and the second sub contact pad 127 may be made of synthetic resin having elasticity.

Particularly, the sub close contact member 150 may further include a third suction body 151 having air suction power. The third suction body 151 may suction air inside the first sub close contact pad 117 and the second sub close contact pad 127 so that the first sub close contact pad 117 and the third sub close contact pad are adsorbed to the one surface portion 11a and the other surface portion 11b, respectively. Particularly, the gas introduced into the first and second sub close contact pads may be discharged to the outside.

The degassing facility for the secondary battery of the present invention may further include a moving device 200 configured to move the movable piece 132 toward the coupling piece 131, and the second gas discharge member 120 moves toward the first gas discharge member 110 by the moving device 200.

The moving device 200 includes: a frame 210 to which the coupling piece 131 is fixed; a movable rod 220 provided on the frame 210, coupled to the movable piece 132, and configured to move the movable piece 132 toward the coupling piece 131 when moving forward; and a driving piece 230 configured to allow the movable rod 220 to move forward.

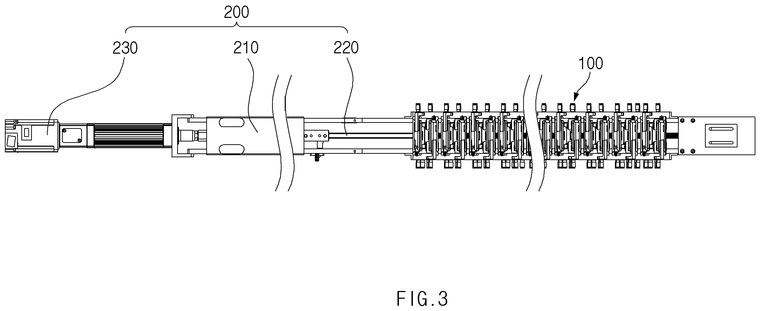

In the moving device 200 having such a configuration, when the driving piece 230 operates, the movable rod 220 moves in a direction of the coupling piece 131 when viewed in FIG. 3, and thus, the moving device 220 is interlocked with the movable rod 220 so that the movable piece 132 linearly moves in the direction of the movable piece 132. Thus, while the second gas discharge member coupled to the movable piece 132 linearly moves toward the first gas discharge member 110, the first and second gas discharge members may be disposed to be pressed to both surfaces of the pouch 11. Thereafter, when the movable rod 220 moves by the driving piece 230 in the direction of the movable rod 132 when viewed in FIG. 3, the movable piece returns to its original position by being interlocked with the movable rod 220. Thus, while the second gas discharge member coupled to the movable piece 132 returns to its original position, the first and second gas discharge members may be separated from both the surfaces of the pouch 11 by a set distance.

The driving piece may be provided as a hydraulic or pneumatic cylinder.

Here, the moving device 200 may operate a plurality of degassing devices 100 at once, as illustrated in FIG. 1. That is, after arranging the plurality of degassing devices 100 in a longitudinal direction of the movable rod 220, the coupling pieces 131 provided on the plurality of degassing devices 100 are fixed to the frame 210, and the movable pieces provided on the plurality of degassing devices 100 are coupled to the movable rods 220.

When coupled to each other in this manner, the movable pieces 132 provided on the plurality of degassing devices 100 may simultaneously linearly move by the movement of the movable rods 220, and as a result, the plurality of degassing devices 100 may operate at once so that the plurality of pouches 11 are degassed at once.

The degassing device 100 may further include a guide member 160 configured so that the pouch 11 inserted between the first and second gas discharge members 110 and 120 are not in contact with the first and second gas discharge members 110 and 120. That is, it is possible to prevent the pouch 11 inserted between the first and second gas discharge members 110 and 120 from being deformed due to being caught on the sub contact pad, the adsorption piece, and the main contact pad.

For example, the guide member 160 includes a first guide pin 118 fixed to the first gas discharge member 110 and configured to guide the one surface portion 11a of the pouch 11 so as to prevent the one surface portion 11a of the pouch 11 from being in contact with the first gad discharge member 110 and a second guide pin fixed to the second gas discharge member and configured to guide the other surface portion 11b of the pouch 11 so as to prevent the other surface portion 11b of the pouch from being in contact with the second gas discharge member 120.

Referring to FIG. 5, the first guide pin 118 includes a fixed part fixed to a lower portion of the first gas discharge member 110, an extension part extending toward a lower left surface of the first gas discharge member 110 when viewed in FIG. 3, and a guide part 132a configured to guide the one surface portion 11a of the pouch 11 while extending in a curve from a front end of the extension part toward the one surface portion 11a.

Referring to FIG. 5, the second guide pin 128 includes a fixed part fixed to a lower portion of the second gas discharge member 110, an extension part extending toward a lower right surface of the second gas discharge member 120 when viewed in FIG. 3, and a guide part 132a configured to guide the other surface portion 11b of the pouch 11 while extending in a curve from a front end of the extension part toward the other surface portion 11b.

The first guide pin 118 and the second guide pin 128 may have elastic restoring force so as to be bent in a direction facing each other or in an opposite direction and thus may stably guide the pouch 11 and prevent the pouch 11 from being damaged.

Therefore, the degassing facility for the secondary battery may effectively discharge the gas generated inside the secondary battery during the charging and discharging of the secondary battery.

Hereinafter, a degassing method using the degassing facility for the secondary battery of the present invention will be described.

### [Degassing method for secondary battery of the present invention]

First, referring to FIG. 12, a pouch 11 is inserted between first and second gas discharge members 110 and 120 of a degassing device 100. Here, the pouch 11 may be inserted between the first and second gas discharge members 110 and 120 while being guided by a first guide pine 118 of the first gas discharge member 110 and a second guide pin 128 of the second gad discharge member 120, and as a result, the pouch 11 may be prevented from being in contact with the first and second gas discharge members.

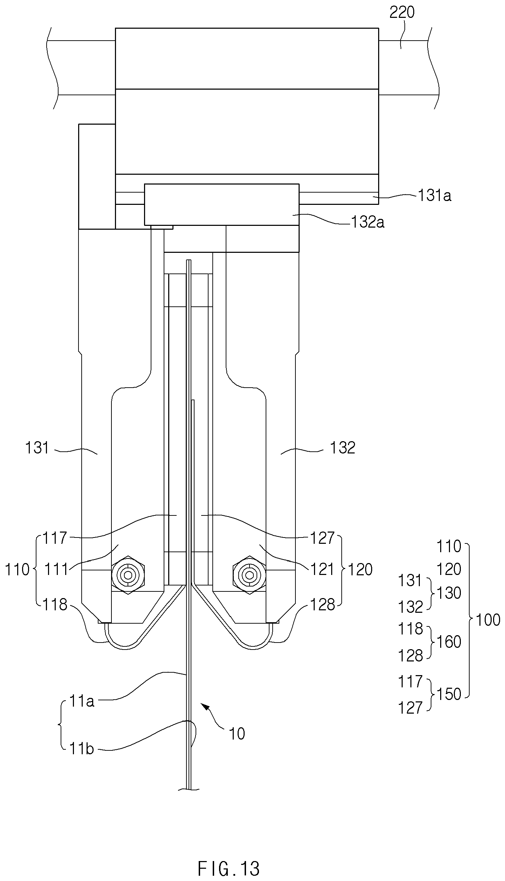

Next, referring to FIG. 13, the first and second gas discharge members are pressed to both surfaces of the pouch 11 through a moving device 200. That is, a movable rod 220 moves by driving a driving piece 230 of the moving device 200. Then, while the second gas discharge member 120 coupled to the movable rod 220 linearly moves in a direction of the first gas discharge member 110, the pouch 11 inserted between the first and second gas discharge members 110 and 120 may be pressed.

Here, a first main contact pad 112 of the first gas discharge member 110 and a second main contact pad 122 of the second gas discharge member 120 are pressed corresponding to one surface portion 11a and the other surface portion 11b of the pouch 11 to form a sealed space, and while the first and second main contact pads are pressed to the surface of the pouch 11, first and second punching pieces 123 punch the one surface portion 11a and the other surface portion 11b of the pouch 11, which are disposed in the sealed space. In addition, a first adsorption piece 115 and a second adsorption piece are adsorbed to the one surface portion 11a and the other surface portion 11b of the pouch 11, respectively, and first and second sub contact pads 117 and 127 are attached to one surface portion 11a and the other surface portion 11b of the pouch 11, respectively.

In this state, a gas inside the pouch 11 is discharged through punched portions of the pouch 11 and the first and second main contact pads using the first and second gas discharge parts.

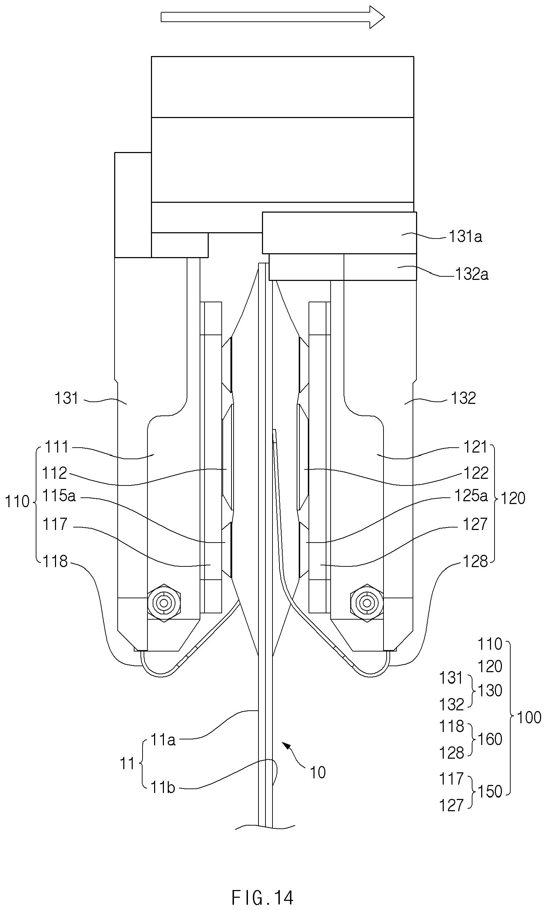

Referring to FIG. 14, when the movable rod 220 returns to its original position through the driving piece 230 to increase in gas discharge force, the first and second gas discharge members move away from each other from the pouch while the first and second gas discharge members return to their original positions. Here, the one surface portion 11a and the other surface portion 11b of the pouch 11 may be spaced apart from each other by the first adsorption piece 115 and the second adsorption piece to more quickly discharge the gas inside the pouch 11 through a space between the one surface portion 11a and the other surface portion 11b.

Thereafter, when the gas discharge is completed, the surface of the pouch 11 having the punched portion is sealed using a sealing member 140.

That is, at the same time, the movable rod 220 moves again through the driving piece 230 so that the first and second gas discharge members 120 press both surfaces of the pouch 11. Here, a first sealing piece 116 of the first gas discharge member 110 and a second sealing piece 126 of the second gas discharge member 120 also press the surface of the pouch 11. In this state, the first and second sealing pieces 116 and 126 are heated to seal the surface of the pouch having the punched portion, which is pressed between the first and second sealing pieces.

When this process is completed, the gas discharge process is completed.

Accordingly, the scope of the present invention is defined by the appended claims more than the foregoing description and the exemplary embodiments described therein. Various modifications made within the meaning of an equivalent of the claims of the invention and within the claims are to be regarded to be in the scope of the present invention.

### [Description of the Symbols]

100: Degassing device
110: First gas discharge member
111: First body
112: First main contact pad
113: First punching piece
114: First gas discharge part
115: First adsorption piece
115a: First adsorption pad
115b: First suction body
116: First sealing piece
117: First sub contact pad
118: First guide pin
120: Second gas discharge member
121: Second body
122: Second main contact pad
123: Second punching piece
124: Second gas discharge part
125: Second adsorption piece
125a: Second adsorption pad
125b: Second suction body
126: Second sealing piece
127: Second sub contact pad
128: Second guide pin
130: Moving member
131: Coupling piece
131a: Guide rail
132: Movable piece
132a: Guide part
140: Sealing member
150: Sub contact member
151: Third suction body
160: Guide member
200: Moving device
210: Frame
220: Movable rod
230: Driving piece

## Claims

1. A degassing facility for a secondary battery, which comprises a degassing device configured to discharge a gas generated in a pouch,
wherein the degassing device comprises:
first and second gas discharge members disposed respectively corresponding to one surface portion and the other surface portion of the pouch to press the one surface portion and the other surface portion of the pouch so as to discharge the gas generated in the pouch through the one surface portion and the other surface portion; and
a moving member configured to linearly move the second gas discharge member toward the first gas discharge member so that the first and second gas discharge members press the one surface portion and the other surface portion,
wherein the moving member comprises:
a coupling piece of which a surface facing the one surface portion is coupled to the first gas discharge member; and
a movable piece of which a surface facing the other surface is coupled to the second gas discharge member and which is connected to the coupling piece, wherein, while the movable piece linearly moves toward the coupling piece, the second gas discharge member linearly moves toward the first gas discharge member to press the one surface portion and the other surface portion of the pouch through the first and second gas discharge members.

2. The degassing facility of claim 1, wherein the coupling piece is provided with a guide rail formed in a direction of the movable piece, and the movable piece is provided with a guide part connected to the guide rail and linearly moving toward the coupling piece along the guide rail.

3. The degassing facility of claim 1, wherein the first gas discharge member comprises a first body coupled to a coupling piece and disposed on the one surface portion of the pouch, a first main contact pad pressed by the one surface portion of the pouch to form a sealed space, a first punching piece configured to punch the pouch disposed in the sealed pace formed by the first main contact pad, and a first gas discharge part configured to discharge the gas inside the pouch through a punched portion of the pouch and the first main contact pad, and
the second gas discharge member comprises a second body disposed on the other surface portion of the pouch, a second main contact pad pressed by the other surface portion of the pouch to form a sealed space, a second punching piece configured to punch the pouch disposed in the sealed space formed by the second main contact pad, and a second gas discharge part configured to discharge the gas inside the pouch through the punched portion of the pouch and the second main contact pad.

4. The degassing facility of claim 3, wherein the first main contact pad and the second main contact pad are pressed to correspond to the one surface portion and the other surface portion, and
the first punching piece and the second punching piece are provided to punch one side and the other side of the pouch disposed in the sealed space between the first main contact pad and the second main contact pad, respectively.

5. The degassing facility of claim 3, wherein the first gas discharge member further comprises one or more first adsorption pieces provided on the first body and adsorbed on the one surface portion of the pouch, and
the second gas discharge member further comprises one or more second adsorption pieces provided on the second body and adsorbed to the other surface of the pouch.

6. The degassing facility of claim 5, wherein, when the first and second gas discharge members return to their original positions by the movable pieces, the first adsorption piece and the second adsorption piece allow the one surface portion and the other surface portion of the pouch to be spaced apart from each other so as to form a gap therebetween.

7. The degassing facility of claim 5, wherein the first adsorption piece comprises a first adsorption pad adsorbed to the one surface portion of the pouch and a first suction body configured to provide suction force so that the first adsorption pad is adsorbed to the one surface portion of the pouch, and
the second adsorption piece comprises a second adsorption pad adsorbed to the other surface portion of the pouch and a second suction body configured to provide suction force so that the second adsorption pad is adsorbed to the other surface portion of the pouch.

8. The degassing facility of claim 3, wherein the degassing device further comprises a sealing member configured to press both surfaces of the pouch, which have the pouched portions, and simultaneously apply heat to both the surfaces of the pouch to seal the punched portions formed in the pouch, the sealing member is provided with a first sealing piece and a second sealing piece.

9. The degassing facility of claim 8, wherein the first sealing piece is provided on the first body, has a closed curve shape connected along an outer circumferential surface of the first main contact pad, and applies heat to the one surface portion having the punched portion while pressing the one surface portion, and
the second sealing piece is provided on the second body, has a closed curve shape connected along an outer circumferential surface of the second main contact pad, and applies heat to the other surface portion having the punched portion while pressing the other surface portion.

10. The degassing facility of claim 9, wherein a sealing groove which has a closed curve shape is formed in a pressing surface of the first sealing piece configured to press the one surface portion, and
a sealing protrusion which has a closed curve shape and which is inserted into the sealing groove is formed on a pressing surface of the second sealing piece configured to press the other surface portion.

11. The degassing facility of claim 3, wherein the degassing device further comprises a sub contact member configured to seal the pouch disposed between the first gas discharge member and the second gas discharge member,
wherein the sub contact member comprises:
a first sub contact pad formed along an edge of the first body, having a closed curve shape of which both ends are connected to each other, and provided to be in close contact with the one surface portion of the pouch having the sealed space, which is closely contacted by the first main contact pad; and
a second sub close contact pad formed along an edge of the second body, having a closed curve shape of which both ends are connected to each other, and provided to be in close contact with the other surface portion of the pouch having sealed space, which is closely contacted by the second main contact pad.

12. The degassing facility of claim 11, wherein the sub close contact member further comprises a third suction body configured to generate suction force so that the first and second sub contact pads are adsorbed to the one surface portion and the other surface portion of the pouch.

13. The degassing facility of claim 1, further comprising a moving device configured to move the movable piece toward the coupling piece,
wherein the moving device comprises:
a frame to which the coupling piece is fixed;
a movable rod provided on the frame, coupled to the movable piece, and configured to move the movable piece toward the coupling piece when moving forward; and
a driving piece configured to allow the movable rod to move forward.

14. The degassing facility of claim 1, wherein the degassing device further comprises a guide member configured to guide the pouch so that the pouch inserted between the first and second gas discharge members are not in contact with the first and second gas discharge members,
wherein the guide member comprises:
a first guide pin fixed to the first gas discharge member and configured to support the one surface portion of the pouch so as to prevent the one surface portion of the pouch from being in contact with the first gad discharge member; and
a second guide pin fixed to the second gas discharge member and configured to support the other surface portion of the pouch so as to prevent the other surface portion of the pouch from being in contact with the second gas discharge member.

15. The degassing facility of claim 14, wherein the first guide pin and the second guide pin have elastic restoring force so as to be bent in a direction facing each other or in an opposite direction.
